# EUROPEAN PATENT SPECIFICATION

(11) **EP 2 346 201 B1**
(45) Date of publication and mention of the grant of the patent: **21.07.2021**
(21) Application number: 10193186.3
(22) Date of filing: 30.11.2010
(51) Int. Cl.: H04L 5/00

(54) **Method and system for MU-MIMO transmission**
Verfahren und System zur MU-MIMO-Übertragung
Procédé et système pour transmission MU-MIMO

(30) Priority: 11.01.2010 CN 201010004504
(43) Date of publication of application: 20.07.2011
(73) Proprietor: NTT DOCOMO, INC., Chiyoda-ku Tokyo (JP)
(72) Inventor: Zhu, Jianchi, Beijing 100190 (CN); Yun, Xiang, Beijing 100190 (CN); Zhang, Bijun, Beijing 100190 (CN); She, Xiaoming, Beijing 100190 (CN); Chen, Lan, Beijing 100190 (CN)
(74) Representative: Zimmermann, Tankred Klaus

(56) References cited:
- HUAWEI: "Transparency of the MU-MIMO", 3GPP DRAFT; R1-094710, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389110, [retrieved on 2009-11-03]
- CATT: "Transmission schemes for DL MU-MIMO", 3GPP DRAFT; R1-094550, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050388965, [retrieved on 2009-11-02]
- PANASONIC: "Further views on Downlink Multi-user MIMO operation for LTE-Advanced", 3GPP DRAFT; R1-094510, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050388930, [retrieved on 2009-11-02]
- NEC GROUP: "Downlink control signalling support for SU/MU-MIMO", 3GPP DRAFT; R1-094730-MU-MIMO_SIGNALING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 3 November 2009 (2009-11-03), XP050389127, [retrieved on 2009-11-03]
- None

## Description

### FIELD OF THE INVENTION

The present invention relates to wireless communication techniques, and more particularly, to a method and system for Multi-User Multiple Input Multiple Output (MU-MIMO) transmission.

### BACKGROUND OF THE INVENTION

From evaluation results on International Mobile Telecommunications Advanced (IMT-A) obtained by International Telecommunications Union-Radio communications (ITU-R), single-cell enhanced Multi-User MIMO (MU-MIMO) has been identified as an important technique for LTE Advanced (LTE-A) to improve system performance. In LTE Rel-8, Single-User MIMO (SU-MIMO) and MU-MIMO are supported by different transmission modes which are configured semi-statically by higher layer. And in LTE Rel-9, transparent MU-MIMO is used and up to rank 2 (i.e. Tᵣₐₙₖ ≤ 2) transmission can be supported. Tᵣₐₙₖ refers to the number of Demodulation Reference Signal (DMRS) ports which are actually allocated to UEs. Orthogonal Cover Code (OCC) is used for DMRS multiplexing. In LTE Rel-10, the transparent MU-MIMO has been further discussed so as to support a situation that Tᵣₐₙₖ > 2. It should be noted that, the total number of DMRS ports Nₚₒᵣₜ, i.e. the number of DMRS ports available for the UEs, is fixed. When DMRS density is 12, Nₚₒᵣₜ=4, and when DMRS density is 24, Nₚₒᵣₜ=8. However, the total number of allocated DMRS ports Tᵣₐₙₖ is not fixed. For example, when Nₚₒᵣₜ=8, Tᵣₐₙₖ may be 2.

The transparent MU-MIMO indicates that, for any UE participating in an MU-MIMO coordinated transmission, there is no difference between SU-MIMO and MU-MIMO transmission. Hereinafter, any UE participating in an MU-MIMO coordinated transmission is referred to as the *i^{th}* UE. During PDSCH receiving, the *i^{th}* UE only knows its own DMRS port information, e.g. the number of ports occupied by the *i^{th}* UE and which ports are occupied by the *i^{th}* UE, etc. However, the *i^{th}* UE does not know DMRS port information of its co-scheduled UEs. For example, UE1, UE2 and UE3 are scheduled in a same Resource Block (RB). The three UEs form a coordinated transmission group, in which UE2 and UE3 are co-scheduled UEs of UE1. During the transparent MU-MIMO transmission, UE1 cannot acquire the DMRS port information of the UE2 and the UE3. Correspondingly, non-transparent MU-MIMO indicates that, any UE in a group of UEs participating in the MU-MIMO coordinated transmission can know the DMRS port information of its co-scheduled UEs.

Compared with the non-transparent MU-MIMO, the transparent MU-MIMO has some advantages and some performance loss at the same time. The advantages of the transparent MU-MIMO include:

### (1) High scheduling flexibility

The transparent MU-MIMO allows relative flexible scheduling, e.g., one UE can simultaneously use SU-MIMO and MU-MIMO on different subbands within one Transmission Time Interval (TTI). The scheduling flexibility is beneficial to the improvement of system performance.

### (2) Low signaling overhead

In the transparent MU-MIMO, only same signaling as SU-MIMO is informed and there is no additional signaling about the co-scheduled UEs.

On the other hand, the transparent MU-MIMO could possibly bring some performance loss due to:

### (1) No effective support for advanced receiver

Advanced receiver, e.g., Interference Rejection Combining (IRC) receiver, can improve the system performance by cancelling the interference from co-scheduled UEs to the *i^{th}* UE. But in the transparent MU-MIMO, since the *i^{th}* UE does not know channel information even the existence of the co-scheduled UEs, effective IRC receiving can not be applied.

### (2) Lack of DMRS density information

For LTE Rel-10, the total number of allocated DMRS ports will change within a range. Therefore, the DMRS density may be used to indicate DMRS port occupation situations of multiple UEs in the coordinated transmission group. More specifically, when the total number of allocated DMRS ports is not larger than 2, the DMRS density is 12 REs/RB. And when the total number of allocated DMRS ports is larger than 2 (any value from 3 to 8), the DMRS density is 24 REs/RB. In the transparent MU-MIMO, if the number of ports occupied by one UE is larger than 2, it indicates that the total number of allocated DMRS ports must be larger than 2. Therefore, the UE is able to know the DMRS density of the coordinated transmission group indirectly. But when the number of ports occupied by the UE is not larger than 2, the UE cannot know the DMRS density. The number of ports occupied by the UE refers to the number of DMRS ports allocated to the UE. In this case, at the UE side, collision between DMRS and PDSCH data will occur, otherwise, puncturing of PDSCH data is needed. The PDSCH data refers to user data of the UE.

In view of the above characteristics of the transparent MU-MIMO in wireless transmission, a detailed solution is required to provide the transparent MU-MIMO between a base station and the UE, so as to exert the advantages of the transparent MU-MIMO at most and avoid the performance loss at the same time.

HUAWEI: "Transparency of the MU-MIMO", 3GPP DRAFT; R1-094710, 3RD GENERATION PARTERSHIP PROJECT (3GPP), MOBILE COMPETENCE CENTER; 640, ROUTE DES LUCIOLES; F-06921 SOPHIA-ANTIPOLIS CEDEX; FRANCE, no. Jeju; 20091109, 9 November 2009, provides analysis for transparent and non-transparent MU-MIMO. An option for supporting more than two users in transparent MU-MIMO is to use the DMRS pattern for rank higher than 2. In this case, orthogonality of the DMRS of different layers could be guaranteed. But when there are totally three layers and above scheduled in MU-MIMO mode, 24 REs are used for the DM-RS patterns. The paired user with one layer transmission must be aware of this, or else, it will not know which DMRS pattern used, the pattern with 12 REs or the pattern with 24 REs.

### SUMMARY OF THE INVENTION

Embodiments of the present invention provide a method and system for MU-MIMO transmission, which improve system performance in the case that a coordinated transmission UE cannot know DMRS port information of its co-scheduled UEs.

The invention is defined by the subject-matter of the independent claims. Preferred embodiments are defined in the dependent claims.

In the method for MU-MIMO transmission provided by the present invention, the base station side maps the user data and the DMRS symbols according to the total number of allocated DMRS ports. Furthermore, the base station maps the user data and the DMRS symbols to multiple REs of one RB according to a DMRS port allocation situation and an Orthogonal Cover Code (OCC) length of each coordinated transmission UE. Each coordinated transmission UE correctly receives its own DMRS symbols and the user data according to an assumed DMRS density and makes full use of its DMRS port information. Even if the assumed DMRS density is different from the actual DMRS density, the method provided by the present invention can still ensure the reception of the DMRS symbols of each coordinated transmission UE.

### BRIEF DESCRIPTION OF THE DRAWINGS

**FIG.1** is a flowchart illustrating a method for MU-MIMO transmission according to an embodiment of the present invention.
**FIG.2** is a schematic diagram illustrating distribution of a first DMRS symbol area, a second DMRS symbol area and a user data area in an RB according to an embodiment of the present invention.
**FIG.3a** and **FIG.3b** are schematic diagrams illustrating comparisons between performances of transparent MU-MIMO and non-transparent MU-MIMO with full buffer traffic.
**FIG.4a** and **FIG.4b** are schematic diagrams illustrating comparisons between performances of transparent MU-MIMO and non-transparent MU-MIMO with on-off traffic.

### DETAILED DESCRIPTION OF THE INVENTION

The present invention will be described hereinafter in further detail with reference to accompanying drawings and embodiments to make the technical solution and merits therein clearer.

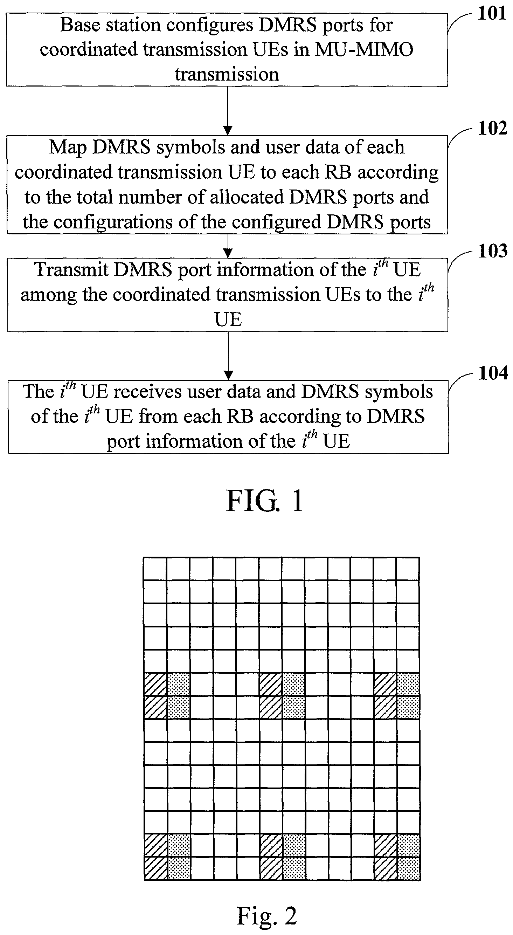

**FIG.1** is a flowchart illustrating a method for MU-MIMO transmission according to an embodiment of the present invention. The method includes the following steps.

Step **101**, a base station configures DMRS ports for coordinated transmission UEs in an MU-MIMO transmission.

Step **102**, DRMS symbols and user data of each coordinated transmission UE are mapped to each RB according to the total number of allocated DMRS ports and the configured DMRS ports.

Step **103**, DMRS port information of the *i^{th}* UE among the coordinated transmission UEs is transmitted to the *i^{th}* UE, where *i* is a natural number and is within the range from 1 to the maximum number of DMRS ports.

Step **104**, the *i^{th}* UE receives the user data and the DMRS symbols of the *i^{th}* UE from each RB according to the DMRS port information of the *i^{th}* UE.

In the above transparent MU-MIMO transmission, each UE participating in the coordinated transmission cannot know DMRS density information corresponding to the total number of allocated DMRS ports (total rank), hereinafter the total rank is denoted by Tᵣₐₙₖ . Therefore, during the mapping of PDSCH at the base station side and the receiving at the UE side, there may be several cases as follows.

Transparent case 1: whether Tᵣₐₙₖ is larger than 2 or not, the base station will not fill user data in REs indicated by biases and REs indicated by dots. The REs indicated by biases belong to a first DMRS symbol area, the REs indicated by dots belong to a second DMRS symbol area, and except those allocated to signaling, the REs without filling belong to a user data area. In particular, the first DMRS symbol area includes REs with m=6, 7, 13, 14 and n=1, 6, 11. The second DMRS symbol area includes REs with m=6, 7, 13, 14 and n=2, 7, 12. Wherein m indicates a time index and n indicates frequency index. The division of the RB is not restricted to the manner shown in **FIG.2****.** One RB may be divided into M^{∗}N REs, wherein M and N are both integers larger than 1.

When Tᵣₐₙₖ > 2 (Tᵣₐₙₖ =3,4,5,6,7,8), the DRMS symbols occupy 24 REs. The above operation of the base station does not waste resources. When Tᵣₐₙₖ ≤ 2, only 12 Res are occupied by the DMRS symbols and the other 12 REs (i.e. the second DMRS symbol area) are null and not used for filling user data.

Accordingly, the UE assumes that the DMRS density used by the base station side is 24 REs occupied per RB (i.e. 24 REs/RB). Therefore, the UE does not receive user data on these 24 REs. Since the base station side never fills user data in the second DMRS symbol area in any case, i.e. the second DMRS symbol area is filled with DMRS symbols or is null, the UE side need not consider the actual DMRS density. Certainly, the resource is wasted in case of the actual DMRS density of 12 REs/RB.

It should be noted that, whether OCC length is 2 or 4, the transparent case 1 is applicable.

Transparent case 2: the UE assumes that the base station side uses DMRS density of 12 REs/RB.
(1) When Tᵣₐₙₖ ≤ 2, the base station side encodes and modulates the user data and the DMRS symbols in bits, and maps the user data and the DMRS symbols onto the REs of each RB. Since Tᵣₐₙₖ ≤ 2, the DMRS symbols occupy at most 12 REs filled with biases as shown in **FIG.2****.** The other REs (i.e. the user data area and the second DMRS symbol area) in each RB are filled with the user data.
   Accordingly, the *i^{th}* UE may occupy Port-0 or Port-1, or occupy both Port-0 and Port-1 at the same time. In other words, the DMRS density is exactly 12 REs/RB and the assumption of the UE is correct. During the receiving process, the UE obtains the DMRS symbols only from the 12 REs indicated by biases and obtains the user data from the other REs.
(2) When Tᵣₐₙₖ > 2 and the OCC length is 2 (i.e. 4 ≥ Tᵣₐₙₖ > 2), and when the *i^{th}* UE occupies one or more REs indicated by biases
   The base station side first fills the user data in the REs other than the 12 REs indicated by biases in **FIG.2**, next punctures the user data in the 12 REs indicated by dots in **FIG.2** and then fills the DMRS symbols of co-scheduled UEs in the 12 REs indicated by dots in **FIG.2**, so as to avoid collision between the DMRS symbols and the user data.
   During the receiving process, the *i^{th}* UE learns that it occupies Port-0 or Port-1 or occupies both Port-0 and Port-1 at the same time according to the DMRS port information of the *i^{th}* UE. In other words, the No. of the port occupied by the *i^{th}* UE is not larger than 1. The *i^{th}* UE obtains the DMRS symbols only from the 12 REs indicated by biases and obtains the user data from other REs. In this case, the *i^{th}* UE also regards the DMRS symbols of the co-scheduled UEs recorded in the 12 REs indicated by dots as the user data of the *i^{th}* UE. It should be noted that, all available DMRS ports are numbered from 0 to Nₚₒᵣₜ-1.
   As to a situation that DMRS ports configured for all coordinated transmission UEs are discontinuous, when it is determined that the total rank is larger than 2 and the OCC length is 2, the base station maps the DMRS symbols onto one of the first DMRS symbol area and the second DMRS symbol area according to the configurations of the configured DMRS ports, and maps the user data onto the other of the first DMRS symbol area and the second DMRS symbol area as well as onto the user data area, then punctures the user data in the other of the first DMRS symbol area and the second DMRS symbol area and fills the DMRS symbols of the co-scheduled UEs in the other of the first DMRS symbol area and the second DMRS symbol area.
   Accordingly, the *i^{th}* UE learns that the OCC length is 2, receives its own DMRS symbols from one of the first DMRS symbol area and the second DMRS symbol area according to the DMRS port information of the *i^{th}* UE, and receives first data from the user data area and the other of the first DMRS symbol area and the second DMRS symbol area.
(3) When Tᵣₐₙₖ > 2 and the OCC length is 2 (i.e. 4 ≥ Tᵣₐₙₖ > 2), and when the *i^{th}* UE occupies one or more REs indicated by dots

The base station side maps the user data onto the user data area, and maps the DMRS symbols onto the first DMRS symbol area and the second DMRS symbol area.

Accordingly, the *i^{th}* UE receives the user data from the user data area, and receives its own DMRS symbols from the first DMRS symbol area and the second DMRS symbol area.

Transparent case 3: similar to the transparent case 2, the UE assumes that the base station side uses DMRS density of 12 REs/RB. The difference is that, when the actual DMRS density is 24 REs/RB, the base station side first fills the user data into REs other than the 12 REs indicated by biases in **FIG2**, and then multiplexes the DMRS symbols of the co-scheduled UEs and the user data in the 12 REs indicated by dots in **FIG.2****.** Although there may be collision between the user data of the *i^{th}* UE and the DMRS symbols of the co-scheduled UEs in the above operation, the user data of the *i^{th}* UE and the DMRS symbols of the co-scheduled UEs can be differentiated at the *i^{th}* UE side because they use different pre-coding vectors.

As to a situation that the DMRS ports configured for all the coordinated transmission UEs are discontinuous, when it is determined that the total rank is larger than 2 and the OCC length is 2, the base station maps the DMRS symbols onto one of the first DMRS symbol area and the second DMRS symbol area according to the DMRS port configurations, and maps the user data onto the other of the first DMRS symbol area and the second DMRS symbol area as well as onto the user data area, and then multiplexes the DMRS symbols of the co-scheduled UEs and the user data in the other of the first DMRS symbol area and the second DMRS symbol area. For example, when DMRS symbols of the *i^{th}* UE occupy the second DMRS symbol area, the user data will be mapped onto the first DMRS symbol area and the user data area.

Accordingly, when learning that the OCC length is 2, the *i^{th}* UE receives its own DMRS symbols from one of the first DMRS symbol area and the second DMRS symbol area according to the DMRS port information of the *i^{th}* UE, receives the user data from the user data area, and receives first data from the other of the first DMRS symbol area and the second DMRS symbol area, de-multiplexes the first data to obtain the user data according to the pre-coding vector.

Hereinafter, the performances of the transparent MU-MIMO and the non-transparent MU-MIMO are compared through simulation. Table 1 gives link level parameters used in the simulation. It is assumed that two OFDM symbols are used for the PDCCH, and the overhead for a common control channel is ignored. It is also assumed that DMRS density is 12 REs/RB for total rank 1-2 and 24 REs/RB for total rank 3-8.

**Table 1 Simulation Parameters**

| | |
|---|---|
| Carrier frequency | 2 GHz |
| Transmission bandwidth | 10 MHz |
| Subframe length | 1 msec |
| RB bandwidth | 180 kHz (12 subcarriers) |
| Subband bandwidth | 1.08 MHz (6 RBs) |
| Channel model | Typical Urban, TU |
| Spatial correlation between antennas | Highly-correlated for Tx (coefficient 0.95) and uncorrelated for Rx |
| Moving speed or Max. Doppler frequency | 3 km/h (f_{D} = 5.55 Hz) |
| Number of eNodeB/UE antennas | 4 (eNodeB), 2 (UE) Note: the antennas are co-polarization |
| Dimensioning of MU-MIMO | Rank 1 for each UE, up to 4 for total rank, and dynamic rank adaptation |
| Scheduling algorithm | Frequency-domain scheduling based on PF |

| Traffic model | Full buffer/ on-off traffic model with on-off factor of 0.5 |
|---|---|
| Control delay on scheduling or AMC | 4 msec |
| HARQ | Chase combination |
| Round trip delay of HARQ | 8 msec |
| MCS set | QPSK (R = 1/8 - 5/6) |
| | 16QAM (R = 1/2 - 5/6) |
| | 64QAM (R = 3/5 - 4/5) |
| PMI feedback | Wideband, 1 TTI; rank 1 |
| CQI feedback | Subband, 1 TTI; rank 1 |
| Granularity of scheduling | Subband, 1 TTI |
| Codebook | Household codebook as Rel-8 |
| UE receiver assumption | MRC/IRC |

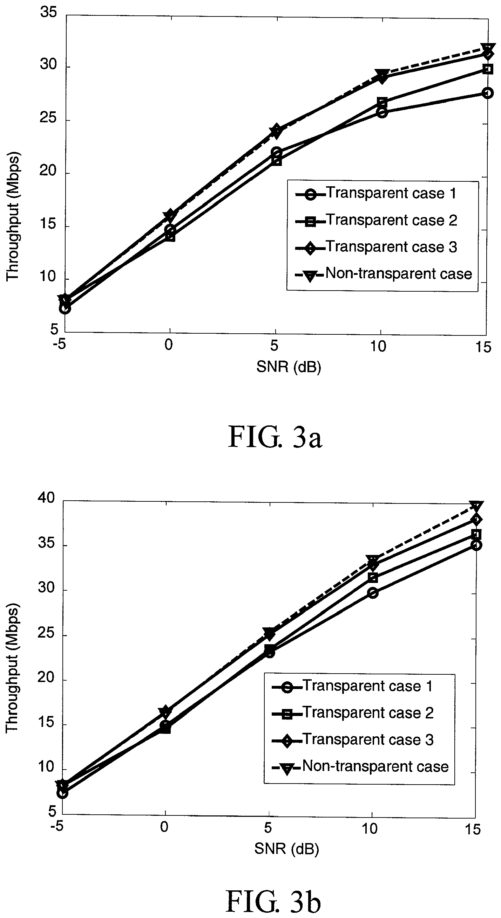

**FIG.3** includes schematic diagrams illustrating comparisons of performances between the transparent MU-MIMO and the non-transparent MU-MIMO with a full buffer traffic model, wherein the full buffer traffic model means that the data amount in a buffer is always full. **FIG.3a** shows the comparison of system throughputs when an MRC receiver is adopted and **FIG.3b** shows the comparison of system throughputs when an IRC receiver is adopted. As to **FIG.3b**, since the DMRS port information of the co-scheduled UEs is unknown in the transparent MU-MIMO, the IRC receiver will use blind detection, e.g. always regards that a co-scheduled UE exists in the blind detection. It can be seen from **FIG.3** that, whether the MRC receiver or the IRC receiver is adopted, the non-transparent MU-MIMO always has the best performance for almost all SNRs. But it should be noted that, the non-transparent MU-MIMO means larger signaling overhead. Transparent case 3 can achieve the performance similar to the non-transparent MU-MIMO for not-high (low and middle) SNRs, but has a little bit performance loss for high SNRs due to impact of degradation of channel estimation accuracy. Furthermore, transparent case 1 has performance loss for all SNRs because of resource waste. Transparent case 2 has the best performance in low SNRs with low total rank because PDSCH puncturing is unnecessary, but there is performance loss for high SNRs due to PDSCH puncturing for high total rank.

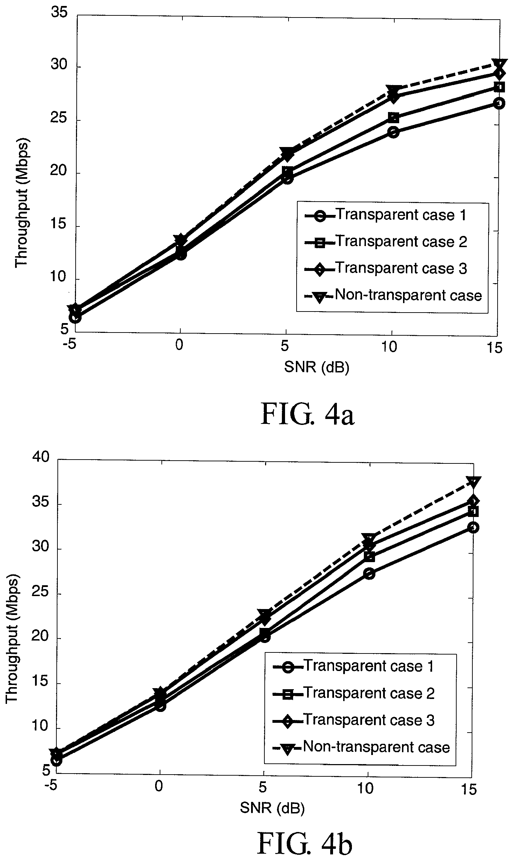

**FIG.4** shows comparisons of the system throughputs between the transparent MU-MIMO and the non-transparent MU-MIMO with an on-off traffic model. An on-off factor is 0.5. The on-off traffic model means that the data amount in the buffer is not always full and the state that the data amount in the buffer is full is intermittent. **FIG4a** shows a comparison of system throughputs when an MRC receiver is adopted and **FIG.4b** shows a comparison of system throughputs when an IRC receiver is adopted. As can be seen, conclusions are similar to that of the full buffer traffic model. Certainly, due to reduction of total rank in case of finite buffer traffic, the gain of transparent MU-MIMO over non-transparent case 3 is a little bit decreased because the gain of transparent case 3 on increased PDSCH length due to multiplexing of PDSCH and DRMS symbols of co-scheduled UEs is reduced. In addition, the performance of transparent case 1 becomes a little bit worse compared to transparent case 2.

The simulation results show the following:
1) Compared with the non-transparent MU-MIMO, the transparent MU-MIMO implemented by adopting the transparent case 3 (i.e. multiplexing the PDSCH of a certain UE and the DMRS symbols of co-scheduled UEs) can achieve similar performance for low SNRs but has a little bit performance loss for high SNRs.
2) For the transparent MU-MIMO, always assuming the DMRS density of 24 REs/RB (i.e. the transparent case 1) at the UE side, or always assuming the DMRS density of 12 REs/RB with PDSCH puncturing (i.e. the transparent case 2) has a little bit performance loss.

The foregoing descriptions are only preferred embodiments of this invention and are not for use in limiting the protection scope thereof. Any changes and modifications can be made by those skilled in the art without departing from the protection scope as set by the appended claims.

## Claims

1. A method for transparent Multi-User Multiple Input Multiple Output, MU-MIMO, comprising:
configuring (101), by a base station, Demodulation Reference Signal, DMRS, ports for coordinated transmission User Equipments, UEs, performing a transparent MU-MIMO transmission, dividing, by the base station, each Resource Block, RB, into M^{∗}N Resource Elements, REs, and grouping the REs in each RB into a first DMRS symbol area, a second DMRS symbol area and a user data area, wherein M and N are natural numbers respectively; and mapping DMRS symbols and user data of each coordinated transmission UE onto each RB according to the total number of allocated DMRS ports and configurations of the configured DMRS ports;
transmitting (103), by the base station, DMRS port information of an *i^{th}* UE of the coordinated transmission UEs to the *i^{th}* UE, wherein i is a natural number;
wherein the mapping the DMRS symbols and the user data onto each RB comprises:
when the number of DMRS ports allocated to the UEs is equal or below 2,
mapping the DMRS symbols onto the first DMRS symbol area;
mapping, by the base station, the user data of the *i^{th}* UE onto the user data area and the second DMRS symbol area; and
receiving, by the *i^{th}* UE, DMRS symbols of the *i^{th}* UE from the first DMRS symbol area and receiving the user data of the *i^{th}* UE from the user data area and the second DMRS symbol area according to the DMRS port information of the *i^{th}* UE and an assumed DMRS density which indicates only the first DMRS symbol area is occupied by DMRS symbols.

2. A method for transparent Multi-User Multiple Input Multiple Output, MU-MIMO, comprising:
when the number of DMRS ports allocated to the UEs is equal or below 2,
receiving, by a User Equipment, UE, communicating with a base station by MU-MIMO, DMRS symbols of the UE from a first DMRS symbol area in a Resource Block, RB, and receiving user data of the UE from a user data area and a second DMRS symbol area in the RB according to DMRS port information of the UE and an assumed DMRS density which indicates only the first DMRS symbol area is occupied by DMRS symbols;
wherein each RB is divided into M^{∗}N Resource Elements, REs, and the REs in each RB are grouped into a first DMRS symbol area, a second DMRS symbol area and a user data area, wherein M and N are natural numbers respectively.

3. A system for transparent Multi-User Multiple Input Multiple Output, MU-MIMO, comprising: a base station and User Equipments, UEs;
wherein the base station is adapted to configure Demodulation Reference Signal, DMRS, ports for coordinated transmission User Equipments, UEs, performing a transparent MU-MIMO transmission, divide each Resource Block, RB, into M^{∗}N Resource Elements, REs, and group the REs in each RB into a first DMRS symbol area, a second DMRS symbol area and a user data area, wherein M and N are natural numbers respectively, and map DMRS symbols and user data of each coordinated transmission UE onto each RB according to the total number of allocated DMRS ports and configurations of the configured DMRS ports; transmit DMRS port information of an *i^{th}* UE of the coordinated transmission UEs to the *i^{th}* UE, wherein *i* is a natural number;
wherein when the number of DMRS ports allocated to the UEs is equal or below 2,
the base station is adapted to:
map the user data to the user data area and the second DMRS symbol area, and
map the DMRS symbols to the first DMRS symbol area; and
wherein the *i^{th}* UE of the UEs is adapted to receive user data and DMRS symbols of the *i^{th}* UE from each RB according to the DMRS port information of the *i^{th}* UE and an assumed DMRS density which indicates only the first DMRS symbol area is occupied by DMRS symbols.

## Patentansprüche

1. Ein Verfahren zur transparenten Mehrbenutzer-Mehrfacheingabe-Mehrfachausgabe, MU-MIMO (Multi-User Multiple Input Multiple Output), das folgende Schritte aufweist:
Konfigurieren (101), durch eine Basisstation, von Demodulationsreferenzsignal-, DMRS-, Ports für Koordinierte-Übertragung-Benutzerendgeräte, -UEs (User Equipments), unter Durchführung einer transparenten MU-MIMO-Übertragung, Aufteilen, durch die Basisstation, jedes Ressourcenblocks, RB, in M^{∗}N Ressourcenelemente, REs, und Gruppieren der REs in jedem RB in einen ersten DMRS-Symbolbereich, einen zweiten DMRS-Symbolbereich und einen Benutzerdatenbereich, wobei M und N jeweils natürliche Zahlen sind; und Abbilden von DMRS-Symbolen und Benutzerdaten jedes Koordinierte-Übertragung-UE auf jeden RB gemäß der Gesamtzahl zugeteilter DMRS-Ports und Konfigurationen der konfigurierten DMRS-Ports;
Übertragen (103), durch die Basisstation, von DMRS-Port-Informationen eines *i-ten* UE der Koordinierte-Übertragung-UEs an das *i-te* UE, wobei *i* eine natürliche Zahl ist;
wobei das Abbilden der DMRS-Symbole und der Benutzerdaten auf jeden RB Folgendes aufweist:
wenn die Anzahl von DMRS-Ports, die den UEs zugeteilt sind, kleiner oder gleich 2 ist,
Abbilden der DMRS-Symbole auf den ersten DMRS-Symbolbereich;
Abbilden, durch die Basisstation, der Benutzerdaten des *i-ten* UE auf den Benutzerdatenbereich und den zweiten DMRS-Symbolbereich; und
Empfangen, durch das *i-te* UE, von DMRS-Symbolen des *i-ten* UE von dem ersten DMRS-Symbolbereich und Empfangen der Benutzerdaten des *i-ten* UE von dem Benutzerdatenbereich und dem zweiten DMRS-Symbolbereich gemäß den DMRS-Port-Informationen des *i-ten* UE und einer angenommenen DMRS-Dichte, die anzeigt, dass nur der erste DMRS-Symbolbereich durch DMRS-Symbole besetzt ist.

2. Ein Verfahren zur transparenten Mehrbenutzer-Mehrfacheingabe-Mehrfachausgabe, MU-MIMO, das folgende Schritte aufweist:
wenn die Anzahl von DMRS-Ports, die den UEs zugeteilt sind, kleiner oder gleich 2 ist,
Empfangen, durch ein Benutzerendgerät, UE, das mit einer Basisstation durch MU-MIMO kommuniziert, von DMRS-Symbolen des UE aus einem ersten DMRS-Symbolbereich in einem Ressourcenblock, RB, und Empfangen von Benutzerdaten des UE aus einem Benutzerdatenbereich und einem zweiten DMRS-Symbolbereich in dem RB gemäß DMRS-Port-Informationen des UE und einer angenommenen DMRS-Dichte, die anzeigt, dass nur der erste DMRS-Symbolbereich durch DMRS-Symbole besetzt ist;
wobei jeder RB in M^{∗}N Ressourcenelemente, REs, unterteilt ist und die REs in jedem RB in einen ersten DMRS-Symbolbereich, einen zweiten DMRS-Symbolbereich und einen Benutzerdatenbereich gruppiert sind, wobei M und N jeweils natürliche Zahlen sind.

3. Ein System zur transparenten Mehrbenutzer-Mehrfacheingabe-Mehrfachausgabe, MU-MIMO, das folgende Merkmale aufweist: eine Basisstation und Benutzerendgeräte, UEs;
wobei die Basisstation dazu angepasst ist, Demodulationsreferenzsignal-, DMRS-, Ports für Koordinierte-Übertragung-Benutzerendgeräte, UEs, zu konfigurieren, die eine transparente MU-MIMO-Übertragung durchführen, jeden Ressourcenblock, RB, in M^{∗}N Ressourcenelemente, Res, zu unterteilen und die REs in jedem RB in einen ersten DMRS-Symbolbereich, einen zweiten DMRS-Symbolbereich und einen Benutzerdatenbereich zu gruppieren, wobei M und N jeweils natürlich Zahlen sind, und DMRS-Symbole und Benutzerdaten jedes Koordinierte-Übertragung-UE auf jeden RB gemäß der Gesamtzahl zugeteilter DMRS-Ports und Konfigurationen der konfigurierten DMRS-Ports abzubilden; DMRS-Port-Informationen eines *i-ten* UE der Koordinierte-Übertragung-UEs an das *i-te* UE zu übertragen, wobei *i* eine natürlich Zahl ist;
wobei, wenn die Anzahl von DMRS-Ports, die den UEs zugeteilt sind, kleiner oder gleich 2 ist,
die Basisstation für Folgendes angepasst ist:
Abbilden der Benutzerdaten auf den Benutzerdatenbereich und den zweiten DMRS-Symbolbereich, und
Abbilden der DMRS-Symbole auf den ersten DMRS-Symbolbereich; und
wobei das *i-te* UE der UEs dazu angepasst ist, Benutzerdaten und DMRS-Symbole des *i-ten* UE von jedem RB gemäß den DMRS-Port-Informationen des *i-ten* UE und einer angenommenen DMRS-Dichte zu empfangen, die anzeigt, dass nur der erste DMRS-Symbolbereich durch DMRS-Symbole besetzt ist.

## Revendications

1. Procédé de transmission par Entrées Multiples Sorties Multiples Multi-Utilisateur, MU-MIMO, transparente, comprenant le fait de:
configurer (101), par une station de base, des orifices de Signal de Référence de Démodulation, DMRS, pour des Equipements d'Utilisateur, UE, de transmission coordonnée effectuant une transmission MU-MIMO transparente, diviser, par la station de base, chaque Bloc de Ressources, RB, en M^{∗}N Eléments de Ressources, RE, et regrouper les RE dans chaque RB en une première zone de symboles de DMRS, une deuxième zone de symboles de DMRS et une zone de données d'utilisateur, où M et N sont respectivement des nombres naturels; et mapper les symboles de DMRS et les données d'utilisateur de chaque UE de transmission coordonnée sur chaque RB selon le nombre total d'orifices de DMRS attribués et les configurations des orifices de DMRS configurés;
transmettre (103), par la station de base, les informations d'orifice de DMRS d'un *i*-ème UE des UE de transmission coordonnée à l'*i*-ème UE, où i est un nombre naturel;
dans lequel le mappage des symboles de DMRS et des données d'utilisateur sur chaque RB comprend le fait de:
lorsque le nombre d'orifices de DMRS attribués aux UE est égal ou inférieur à 2,
mapper les symboles de DMRS sur la première zone de symboles de DMRS;
mapper, par la station de base, les données d'utilisateur de l'*i*-ème UE sur la zone de données d'utilisateur et la deuxième zone de symboles de DMRS; et
recevoir, par l'i-ème UE, les symboles de DMRS de l'*i*-ème UE de la première zone de symboles de DMRS et recevoir les données d'utilisateur de l'*i*-ème UE de la zone de données d'utilisateur et de la deuxième zone de symboles de DMRS selon les informations d'orifice de DMRS de l'*i*-ème UE et une densité de DMRS supposée qui indique que seule la première zone de symboles de DMRS est occupée par des symboles de DMRS.

2. Procédé de transmission par Entrées Multiples Sorties Multiples Multi-Utilisateur, MU-MIMO, transparente, comprenant le fait de:
lorsque le nombre d'orifices de DMRS attribués aux UE est égal ou inférieur à 2,
recevoir, par un Equipement d'Utilisateur, UE, communiquant avec une station de base par MU-MIMO, les symboles de DMRS de l'UE d'une première zone de symboles de DMRS dans un Bloc de Ressources, RB, et recevoir les données d'utilisateur de l'UE d'une zone de données d'utilisateur et d'une deuxième zone de symboles de DMRS dans le RB selon les informations d'orifice de DMRS de l'UE et une densité de DMRS supposée qui indique que seule la première zone de symboles de DMRS est occupée par les symboles de DMRS;
dans lequel chaque RB est divisé en M^{∗}N Eléments de Ressources, RE, et les RE dans chaque RB sont regroupés en une première zone de symboles de DMRS, une deuxième zone de symboles de DMRS et une zone de données d'utilisateur, où M et N sont respectivement des nombres naturels.

3. Système de transmission par Entrées Multiples Sorties Multiples Multi-Utilisateur, MU-MIMO, transparente comprenant: une station de base et des Equipements d'Utilisateur, UE;
dans lequel la station de base est adaptée pour configurer les orifices de Signal de Référence de Démodulation, DMRS, pour des Equipements d'Utilisateur, UE, de transmission coordonnée effectuant une transmission MU-MIMO transparente, diviser chaque Bloc de Ressources, RB, en M^{∗}N Eléments de Ressources, RE, et regrouper les RE dans chaque RB en une première zone de symboles de DMRS, une deuxième zone de symboles de DMRS et une zone de données d'utilisateur, où M et N sont respectivement des nombres naturels; et mapper les symboles de DMRS et les données d'utilisateur de chaque UE de transmission coordonnée sur chaque RB selon le nombre total d'orifices de DMRS attribués et les configurations des orifices de DMRS configurés; transmettre les informations d'orifice de DMRS d'un *i*-ème UE des UE de transmission coordonnée à l'*i*-ème UE, où *i* est un nombre naturel;
dans lequel, lorsque le nombre d'orifices de DMRS attribués aux UE est égal ou inférieur à 2,
la station de base est adaptée pour:
mapper les données d'utilisateur sur la zone de données d'utilisateur et la deuxième zone de symboles de DMRS, et
mapper les symboles de DMRS sur la première zone de symboles de DMRS; et
dans lequel l'*i*-ème UE des UE est adapté pour recevoir les données d'utilisateur et les symboles de DMRS de l'*i*-ème UE de chaque RB selon les informations d'orifice de DMRS de l'*i*-ème UE et une densité de DMRS supposée qui indique que seule la première zone de symboles de DMRS est occupée par les symboles de DMRS.
